# EUROPÄISCHE PATENTSCHRIFT

(11) **EP 0 943 125 B1**
(45) Veröffentlichungstag und Bekanntmachung des Hinweises auf die Patenterteilung: **24.10.2001**
(21) Anmeldenummer: 96942316.9
(22) Anmeldetag: 03.12.1996
(51) Int. Cl.: G06F 3/14

(54) **ANSTEUERUNG VON ZWEI MONITOREN MIT ANZEIGEDATENÜBERTRAGUNG VIA FIFO-PUFFER**
CONTROLLING TWO MONITORS WITH TRANSMISSION OF DISPLAY DATA USING A FIFO BUFFER
COMMANDE DE DEUX UNITES DE CONTROLE AVEC TRANSMISSION DES DONNEES D'AFFICHAGE VIA UN TAMPON FIFO

(43) Veröffentlichungstag der Anmeldung: 22.09.1999
(73) Patentinhaber: SPEA Software GmbH, D-82319 Starnberg (DE)
(72) Erfinder: BRENNER, Alfred, D-82131 Gauting (DE)
(74) Vertreter: Schoppe, Fritz, Dipl.-Ing.
(86) Internationale Anmeldenummer: EP9605381
(87) Internationale Veröffentlichungsnummer: WO9825200

(56) Entgegenhaltungen:
- WO-A-88/02162
- DE-A- 4 404 437
- FR-A- 2 528 604
- US-A- 5 138 305
- US-A- 5 488 385
- PATENT ABSTRACTS OF JAPAN vol. 18, no. 205 (E-1536), 12.April 1994 & JP 06 006724 A (FUJITSU GENERAL LTD.)

## Beschreibung

Die vorliegende Erfindung bezieht sich auf Schnittstellen zwischen Monitoren und Computern und insbesondere auf das Ansteuern von zwei Monitoren aufgrund eines Pixeldatenstroms.

Durch die Verbreitung von Fenstersystemen bei Personalcomputern oder Workstations entstand der Bedarf nach größeren Monitoren, um mehr Fenster auf einem Monitor darstellen zu können. Obwohl sich größere als 14-Zoll-Monitore in letzter Zeit immer mehr durchsetzen, ist diese Option jedoch außerordentlich teuer, da bereits eine relativ kleine Vergrößerung der Monitorfläche zu einem erheblichen Anstieg der Monitorkosten führt. Ein Benutzer von Fenstersystemen benötigt beispielsweise beim gleichzeitigen Arbeiten in einem Textverarbeitungssystem und beispielsweise in einem Graphikprogramm oder einem CAD-Programm mehrere Fenster auf einem Bildschirm. Aufgrund der Größe eines Bildschirmes ist es nahezu unmöglich, gleichzeitig alle benötigten Fenster darzustellen und beispielsweise mittels einer Tastatur oder einer Maus das eine oder andere Fenster zu aktivieren. Der Benutzer ist daher gezwungen, wenn er von einer Anwendung in die andere wechseln möchte, bestimmte Fenster zu schließen und andere zu öffnen. Bei Anwendungen, die ein häufiges Hin- und Herbewegen zwischen verschiedenen Fenstern, die verschiedene Anwendungen darstellen, benötigen, ist das ständige Schließen und Öffnen ein lästiges Unterfangen, was nicht zuletzt die Arbeitseffizienz des Benutzers deutlich einschränkt.

Aufgrund dieser Tatsache entstand der Bedarf, an einen Personalcomputer bzw. an eine Workstation zwei oder mehrere Bildschirme anzuschließen und nebeneinander zu stellen, um die effektive Zeilenbreite durch die Verwendung von zwei Monitoren wirksam zu verdoppeln. Ein Benutzer wird dadurch in die Lage versetzt, beispielsweise Windows-Steuerfenster auf einem Monitor anzuordnen, während eine Anwendung, wie z. B. eine Textverarbeitung, auf dem anderen Monitor dargestellt wird. Möchte ein Benutzer Graphiken in eine Textverarbeitung einbauen, so wird er durch ein System, das zwei Monitore aufweist, in die Lage versetzt, auf dem einen Monitor eine Textverarbeitung durchzuführen, während auf dem anderen Monitor eine Graphik bearbeitet und dementsprechend dimensioniert wird, um an den für sie vorgesehenen Platz in einem gerade bearbeiteten Dokument zu passen. Das selbe trifft beispielsweise auch für CAD-Anwendungen zu, bei denen der Wunsch besteht, für die CAD-Anwendung einen qualitativ hochwertigen, hochauflösenden Bildschirm zu haben, während es für Steuersymbole auf dem anderen Bildschirm nicht notwendig ist, einen derart hochqualitativen Bildschirm zu verwenden, wodurch Arbeitsplatzkosten eingespart werden können.

Um zwei oder mehrere Monitore von einem Computer aus anzusteuern, um die wirksame Zeilenbreite zu verdoppeln, bzw. zu vervielfachen, ist es notwendig, die von dem Computer erzeugten Graphikdaten korrekt auf die einzelnen Bildschirme zu "verteilen". Zum Speichern von Daten, die auf Monitoren dargestellt werden sollen, existieren unter anderem sogenannte Videodirektzugriffsspeicher oder VRAMs, in denen die anzuzeigenden Daten zeilenweise adressiert sind. Eine Zeile eines Videodirektzugriffsspeichers kann somit soviele Pixel enthalten, wie auf einem zugeordnetem Monitor in einer Zeile dargestellt werden können, wobei diese Zeile jedoch lediglich mit einer Adresse adressiert werden muß, wie es für Fachleute bekannt ist.

Bei einem bekannten System zum Ansteuern von zwei Monitoren ist jeder Monitor mit einem eigenen Digital-Analog-Wandler versehen, welcher notwendig ist, um die von dem Computer gelieferten digitalen Daten in für den Monitor notwendige analoge Daten umzuwandeln. Ferner ist jeder Digital-Analog-Wandler mit einem eigenen Videodirektzugriffsspeicher verbunden, welcher wiederum durch eine eigene Graphiksteuerung angesteuert wird. Die von einem Computer gelieferten anzuzeigenden Daten gelangen bei einem bekannten System über einen Hostbus in einen Puffer, dem eine softwaremäßige Bildaufteilung vorangestellt ist. Die Host-CPU, d.h. die zentrale Verarbeitungseinheit des Hostsystems, speichert die auf den beiden Monitoren darzustellenden Daten jeweils in einen einem Monitor zugeordneten Videodirektzugriffsspeicher ein, aus dem dann mittels der für jeden Videodirektzugriffsspeicher vorgesehenen Graphiksteuerung Daten ausgelesen und in eine analoge Form umgewandelt werden können, um auf den Monitoren angezeigt zu werden. Das bekannte System weist somit zwei parallele Zweige auf, wobei ein Zweig aus einem Monitor, einem Digital-Analog-Wandler, einem Videodirektzugriffsspeicher und einer Graphiksteuerung besteht, wobei die beiden Zweige über eine Software-Bildaufteilungseinheit gesteuert verbunden sind, welche über einen Datenpuffer, der ebenfalls als VRAM implementiert sein kann, von dem Hostbus des Computers gespeist wird. Die Host-CPU muß also bei diesem bekannten System das Aufteilen des Pixelstroms übernehmen. Der auf den Monitoren darzustellende Pixelstrom muß also durch die Software-Bildaufteilungseinheit in die jeweiligen Videodirektzugriffsspeicher aufgeteilt werden.

Ein Nachteil des bekannten Systems besteht darin, daß für jeden Monitor ein eigener Videodirektzugriffsspeicher und eine eigene Graphiksteuerung vorgesehen werden muß, wodurch die Kosten eines Systems aus zwei Monitoren und einem Computer unnötig hoch werden. Ferner ist die softwaremäßige Bildaufteilung in der Software.-Bildaufteilungseinheit langsam, wodurch die Bildaufbauzeiten des Systems aus zwei Monitoren unnötig erhöht werden.

Ausgehend von diesem Stand der Technik liegt der vorliegenden Erfindung die Aufgabe zugrunde, eine wirtschaftliche und schnelle Ansteuerung von zwei Monitoren aufgrund eines eingangsseitigen Pixeldatenstroms zu schaffen.

Diese Aufgabe wird durch ein Verfahren zum Ansteuern von zwei Monitoren aufgrund eines eingangsseitigen Pixeldatenstroms gemäß Anspruch 1 sowie durch eine Monitorsteuerschaltung zu Ansteuern von zwei Monitoren aufgrund eines eingangsseitigen Pixeldatenstroms gemäß Anspruch 10 gelöst.

Der Erfindung liegt die Erkenntnis zugrunde, daß auf einen eigenen Videodirektzugriffsspeicher für jeden Monitor verzichtet werden kann, indem jeder Videodirektzugriffsspeicher durch eine schnelle und preisgünstige FIFO-Speichervorrichtung und zwischen zwei FIFOs geschaltete FIFO-Steuerlogikeinheiten ersetzt werden kann. Der Betrieb der FIFO-Speichervorrichtungen für jeden Monitor wird durch jeweilige zwischen zwei FIFOs geschaltete FIFO-Steuerlogikeinheiten gesteuert und synchronisiert. Bei einem bevorzugten Ausführungsbeispiel, das Videodirektzugriffsspeicher in Form von VRAMs verwendet, werden die FIFO-Speichervorrichtungen für jeden Monitor aus einem einzigen VRAM-Bildspeicher gespeist, welcher wiederum von einer Graphiksteuerung gesteuert wird. Dadurch werden lediglich ein Bildspeicher und eine Graphiksteuerung zum Ansteuern von allen mit einem Computer verbundenen Monitoren benötigt.

Ein bevorzugtes Ausführungsbeispiel der vorliegenden Erfindung wird nachfolgend bezugnehmend auf die beiliegenden Zeichnungen detaillierter erläutert. Es zeigen:
- Fig. 1: ein Übersichtsdiagramm eines Computersystems mit zwei Monitoren gemäß der vorliegenden Erfindung;
- Fig. 2: ein Blockdiagramm gemäß einem Ausführungsbeispiel der vorliegenden Erfindung; und
- Fig. 3: ein Zeitablaufdiagramm für das Blockdiagramm aus Fig. 2.

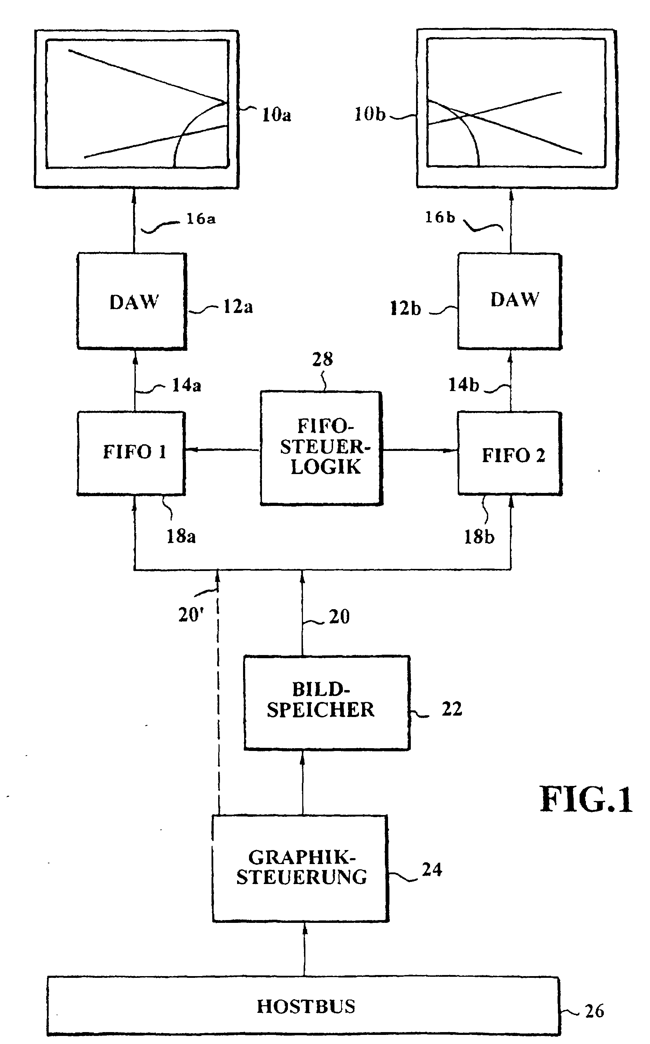

Fig. 1 zeigt ein Übersichtsdiagramm eines Computersystems zum Ansteuern von zwei Monitoren 10a, 10b. Bei dem bevorzugten Ausführungsbeispiel der vorliegenden Erfindung, das in Fig. 1 übersichtsmäßig dargestellt ist, werden lediglich zwei Monitore 10a und 10b angesteuert. Nach der Beschreibung der vorliegenden Erfindung ist es für Fachleute jedoch offensichtlich, daß auch eine Mehrzahl von Monitoren angesteuert werden kann, welche den einen Monitor 10a und den anderen Monitor 10b aufweist. Dem einen Monitor 10a und dem anderen Monitor 10b sind ein Digital-Analog-Wandler 12a bzw. ein Digital-Analog-Wandler 12b zugeordnet. Die Digital-Analog-Wandler 12a und 12b können entweder in dem jeweiligen Monitor integriert sein, was jedoch nicht üblich ist, oder extern auf beispielsweise einer Graphikkarte vorhanden sein. Die Digital-Analog-Wandler 12a und 12b erhalten als Eingabe digitale Signale 14a bzw. 14b und liefern bei einem bevorzugten Ausführungsbeispiel der vorliegenden Erfindung analoge RGB-Signale 16a, 16b.

Der Digital-Analog-Wandler 12a wird von einer ersten FIFO-Speichervorrichtung 18a mit auf dem Monitor 10a darzustellenden Pixeldaten versorgt, welche ein Teil der digitalen Eingangssignale 14a für den DAW 12a sind. Dazu analog speist eine zweite FIFO-Speichervorrichtung 18b den Digital-Analog-Wandler 12b mit digitalen Pixeldaten, die auf dem Monitor 10b angezeigt werden sollen. Die erste und die zweite FIFO-Speichervorrichtung werden von einem Eingangsseitigen Pixeldatenstrom 20 mit Pixeldaten versorgt, welche in einem Bildspeicher 22, der bei einem bevorzugten Ausführungsbeispiel ein Videodirektzugriffsspeicher (VRAM) ist, abgelegt sind. Eine Graphiksteuerung 24 erhält den eingangsseitig erzeugten Pixeldatenstrom 20 sowie zeitliche Steuersignale für denselben von einem Hostbus 26, welcher mit einem Computer verbunden ist. An dieser Stelle sei darauf hingewiesen, daß das Übersichtsdiagramm von Fig. 1 lediglich die Aufteilung des eingangsseitigen Pixeldatenstroms auf die beiden Monitore 10a und 10b darstellt, während in Fig. 1 keine Steuersignale gezeigt sind.

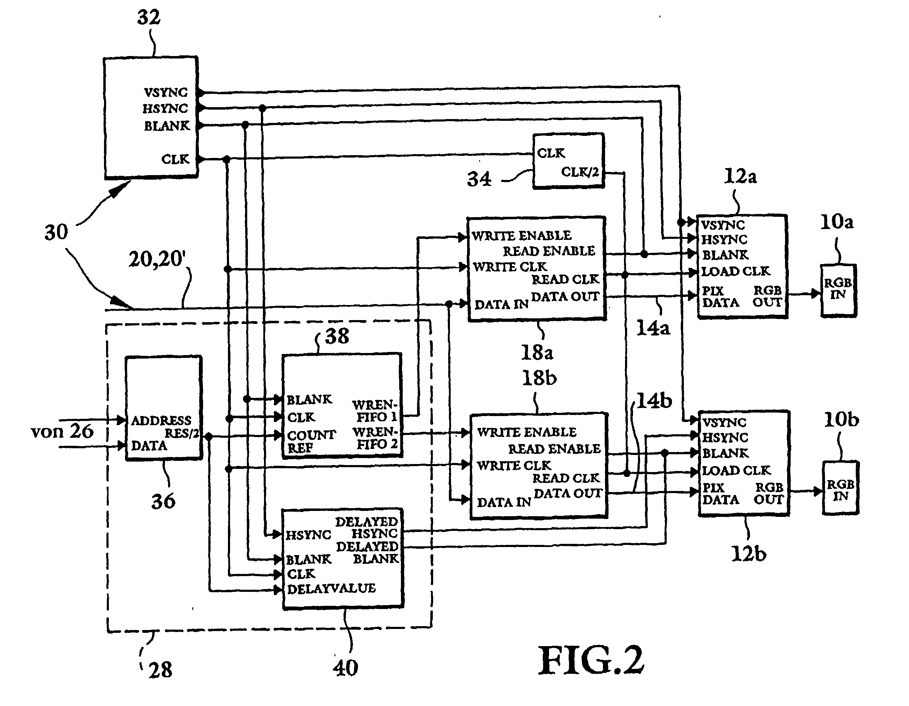

Wie es bereits erwähnt wurde, werden bei einem bevorzugten Ausführungsbeispiel der vorliegenden Erfindung VRAMs verwendet, welche den Bildspeicher 22 bilden. Bei anderen Ausführungsbeispielen der vorliegenden Erfindung, bei denen DRAMs, SDRAMs, SGRAMs oder WRAMs verwendet werden, ist der Bildspeicher 22 nicht notwendig, da ein eingangsseitiger Pixelstrom 20 dann in der Graphiksteuerung generiert und direkt in die beiden FIFO-Speichervorrichtungen 18a, 18b eingespeist werden kann, wie es durch die gestrichelte Linie in Fig. 1 dargestellt ist. Im Sinne der vorliegenden Erfindung kann demnach davon gesprochen werden, daß an den Eingängen der beiden FIFO-Speichervorrichtungen 18a, 18b der eingangsseitige Pixeldatenstrom 20 anliegt, der entsprechend auf den ersten und den zweiten Monitor 10a und 10b aufgeteilt wird. Die korrekte Aufteilung des Pixeldatenstroms 20 wird durch eine in Fig. 2 näher beschriebene FIFO-Steuerlogik 28 gesteuert. Die FIFO-Steuerlogik 28 unterstützt ferner das richtige Auslesen der FIFO-Speichervorrichtungen 18a und 18b.

Fig. 2 zeigt ein detaillierteres Blockschaltbild des Übersichtsdiagramms von Fig. 1. Der eingangsseitige Pixeldatenstrom 20 bzw. 20' von dem Bildspeicher 22 bzw. von der Graphiksteuerung 24 liegt gleichermaßen an der ersten und der zweiten FIFO-Speichervorrichtung an. Beide FIFO-Speichervorrichtungen 18a und 18b weisen drei Eingänge WRITE ENABLE für ein Schreiben-Freigabesignal, WRITE CLK für ein Schreiben-Taktsignal bzw. DATA IN für den eingangsseitigen Pixeldatenstrom auf. Ausgangsseitig umfassen die erste FIFO-Speichervorrichtung und die zweite FIFO-Speichervorrichtung einen Ausgang READ ENABLE für ein Lesen-Freigabesignal, einen Ausgang READ CLK für ein Lesen-Taktsignal sowie einen Ausgang DATA OUT für die digitalen Pixelsignale 14a bzw. 14b in den DAW 12a bzw. 12b. Wie es bereits in Fig. 1 beschrieben wurde, folgt der ersten FIFO-Speichervorrichtung 18a der DAW 12a, der den einen Monitor 10a versorgt. Gleichermaßen folgt der zweiten FIFO-Speichervorrichtung 18b der DAW 12b, der wiederum den anderen Monitor 10b versorgt.

Die erste und die zweite FIFO-Speichervorrichtung 18a, 18b werden durch eine Steuerung 30 gesteuert, welche einen Zeitgenerator 32, eine Frequenzeinstellvorrichtung 34 sowie die bereits in Fig. 1 erwähnte FIFO-Steuerlogik 28 aufweist. Die FIFO-Steuerlogik 28 umfaßt ein Bildschirmauflösungsregister 36, einen Pixelzähler 38 und eine programmierbare Verzögerungseinrichtung 40.

Das Bildschirmauflösungsregister 36 steht mit dem Hostbus 26 (Fig. 1) in Verbindung, von dem das Bildschirmauflösungsregister über einen Adresseneingang ADDRESS und über einen Dateneingang DATA für die Monitore 10a und 10b spezifische Daten erhält. Diese Monitor-spezifischen Daten umfassen die gesamte Zeilenauflösung der beiden Monitore, d.h. die Anzahl der Pixel in einer Zeile des einen Monitors 10a summiert mit der Anzahl der Pixel einer Zeile des anderen Monitors 10b. Bei einem bevorzugten Ausführungsbeispiel der vorliegenden Erfindung ist die Anzahl der Pixel einer Zeile des einen Monitors 10a gleich der Anzahl der Pixel einer Zeile des anderen Monitors 10b. Eine Zeile des eingangsseitigen Pixeldatenstroms 20 weist somit doppelt soviele Pixel wie eine Zeile eines Monitors 10a oder 10b auf. Der eine Teil einer Zeile des eingangsseitigen Pixeldatenstroms 20 wird somit auf dem einen Monitor 10a dargestellt, während der andere Teil der Zeile des eingangsseitigen Pixeldatenstroms auf dem anderen Monitor 10b dargestellt wird. Bei dem beschriebenen Ausführungsbeispiel ist der eine Teil gleich groß wie der andere Teil, während die beiden Teile zusammen eine Zeile des eingangsseitigen Pixeldatenstroms 20 ergeben. Die vorliegenden Erfindung ist jedoch auch auf Systeme mit mehr als zwei Monitoren anwendbar, sowie auf Systeme, bei denen die auf Monitoren dargestellten Teilzeilen eine unterschiedliche Anzahl von Pixeln aufweisen. Informationen bezüglich der Anzahl der Monitore sowie der Pixelanzahl einer Zeile jedes Monitors sind in dem Bildschirmauflösungsregister 36 abgelegt. Da das bevorzugte Ausführungsbeispiel der vorliegenden Erfindung zwei Monitore 10a und 10b aufweist, die eine gleiche Zeilenauflösung besitzen, wird über einen Ausgang RES/2 ein Auflösungssignal ausgegeben, dessen Wert der halben Auflösung des eingangsseitigen Pixeldatenstroms 20, d.h. der ganzen Auflösung des Monitores 10a bzw. 10b entspricht. Das Auflösungssignal wird dem Pixelzähler 38 als Zählerreferenzsignal über einen Eingang COUNT REF zugeführt. Der Pixelzähler 38 weist ferner die Eingänge BLANK und CLK für ein Dunkeltastungssignal bzw. ein Taktsignal auf. Ausgangsseitig weist der Pixelzähler 38 die beiden Ausgänge WRENFIFO 1 und WRENFIFO 2 auf, um ein Schreiben-Freigabesignal zu der ersten FIFO-Speichervorrichtung 18a bzw. ein Schreiben-Freigabe-Signal zu der zweiten FIFO-Speichervorrichtung 18b zu senden. Die programmierbare Verzögerungseinrichtung 40 weist einen Eingang HSYNC für ein Horizontalsynchronisationssignal, einen Eingang BLANK für ein Dunkeltastungssignal, einen Eingang CLK für ein Taktsignal sowie einen Eingang DELAY VALUE für ein Verzögerungswertsignal von dem Bildschirmauflösungsregister 36 auf. Ausgangsseitig umfaßt die programmierbare Verzögerungseinrichtung 40 einen Ausgang DELAYED HSYNC für ein verzögertes Horizontalsynchronisationssignal und einen Ausgang DELAYED BLANK für ein verzögertes Dunkeltastungssignal.

Das vertikale Synchronisationssignal, das Dunkeltastungssignal sowie das Taktsignal werden in einem Zeitgenerator 32 erzeugt, welcher in der Lage ist, aus dem von dem Hostbus 26 zu der Graphiksteuerung 24 übertragenen Datenstrom, der sowohl den eingangsseitigen Pixeldatenstrom 20 als auch Steuersignale für denselben aufweist, diese Steuersignale zu extrahieren. Der Zeitgenerator 32 kann somit eine externe Einheit sein oder in der Graphiksteuerung 24 integriert sein. Die Frequenzeinstellvorrichtung 34, die ebenfalls ein Teil der Steuerung 30 ist, führt bei dem bevorzugten Ausführungsbeispiel der vorliegenden Erfindung eine Teilerfunktion durch, um aus dem Taktsignal CLK ein Taktsignal zu erzeugen, das die halbe Frequenz des Taktsignals CLK aufweist, wobei die Frequenz des halbierten Taktsignals CLK/2 der Betriebsfrequenz der Monitore 10a und 10b entspricht.

Die beiden Digital-Analog-Wandler 12a, 12b weisen auf für Fachleute bekannte Art und Weise Eingänge VSYNC für das vertikale Synchronisationssignal, HSYNC für das horizontale Synchronisationssignal, BLANK für das Dunkeltastungssignal, LOAD CLU für ein Laden-Taktsignal und einen Eingang PIX DATA für die in eine analoge Form umzuwandelnden Pixeldaten auf. Ausgangsseitig umfassen die DAWs 12a und 12b einen Ausgang RGB OUT, um den jeweiligen Eingang RGB der Monitore 10a bzw. 10b mit einem RGB-Signal zu versorgen, wie es für Fachleute bekannt ist.

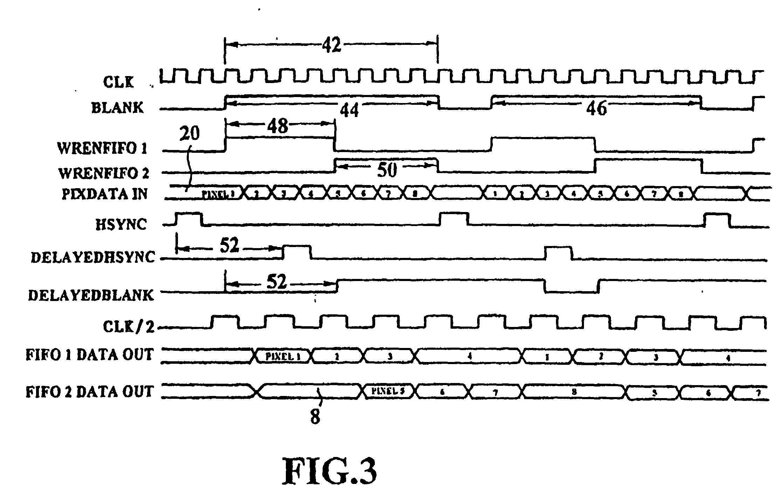

Bezugnehmend auf Fig. 3 wird im nachfolgenden die Funktionsweise des in Fig. 2 gezeigten und oben beschriebenen Blockschaltbilds erläutert. Das Taktsignal CLK kann eine einem beliebigen Standard entsprechende Taktfrequenz aufweisen. In Fig. 3 ist ein Zeitablaufdiagramm für eine aktive Anzeigezeit 42 von acht Pixeln beschrieben. Für Fachleute ist es offensichtlich, daß das Prinzip auf alle anderen Anzeigezeiten übertragbar ist, wobei die Beschränkung auf eine aktive Anzeigezeit von acht Taktperioden bzw. acht Pixeln ausschließlich der Anschaulichkeit und Übersichtlichkeit dient.

Der eingangsseitige Pixeldatenstrom 20 weist somit eine Zeilenlänge von 8 Pixeln auf, wobei die beiden Monitore 10a und 10b jeweils eine Zeilenbreite von vier Pixeln aufweisen. Eine Zeile des eingangsseitigen Pixeldatenstroms wird somit in einen Teil mit einer Länge von vier Pixeln und in einen anderen Teil mit der gleichen Länge von vier Pixeln aufgeteilt.

Das Dunkeltastungssignal BLANK ist für Fachleute bekannt und aktiviert in seinem logisch hohen Zustand den DAW 12a, der dem einen Monitor 10a zugeordnet ist. Das Dunkeltastungssignal BLANK definiert somit die aktive Anzeigezeit 42, wobei zwischen einer ersten angezeigten Zeile und einer zweiten angezeigten Zeile 46 eine Pause von 2 Perioden des Taktsignals CLK vorhanden ist, in der das bekannte Horizontalsynchronisationssignal HSYNC für die Dauer von einer Taktperiode in den hohen Zustand geht. Das Signal WRENFIFO1 ermöglicht ein Schreiben in die erste FIFO-Speichervorrichtung 18a für einen Teil 48 einer Zeile des eingangsseitigen Pixeldatenstrom 20, während das Schreiben-Freigabesignal für die zweite FIFO-Speichervorrichtung WRENFIFO2 die zweite FIFO-Speichervorrichtung 18b für einen anderen Teil 50 einer Zeile des eingangsseitigen Pixeldatenstrom 20 freigibt. Durch die Phasenverschiebung der beiden Signale WRENFIFO1 und WRENFIFO2 um 180° wird bewirkt, daß die ersten vier Pixel einer Zeile des eingangsseitigen Pixeldatenstroms 20 in die erste FIFO-Speichervorrichtung eingetaktet werden, während die zweiten vier Pixel, d.h. die Pixel 5 bis 8, in die zweite FIFO-Speichervorrichtung 18b eingetaktet werden. Die Taktgeschwindigkeit zum Schreiben in eine FIFO-Speichervorrichtung 18a und 18b entspricht der Frequenz des Taktsignals CLK, wobei an dieser Stelle besonders darauf hingewiesen wird, daß das System gemäß der vorliegenden Erfindung keine Zwischenpuffer irgendwelcher Art benötigt, und daß die FIFO-Speichervorrichtungen 18a und 18b der Aufteilung des eingangsseitigen Pixeldatenstroms 20 auf die vorhandenen Monitore dienen.

Die Schreiben-Freigabesignale für die beiden FIFO-Speichervorrichtungen 18a und 18b werden von dem Pixelzähler 38 erzeugt, welcher ein binärer Zähler sein kann, der durch ein Zähler-Referenzsignal an seinem Eingang COUNT REF auf einen Wert von 4 eingestellt wird und während der Zeitperiode, die einer ansteigenden Flanke des Dunkeltastungssignals BLANK folgt, das Signal WRENFIFO1 ausgibt und während seiner zweiten Zählperiode nach einer ansteigenden Flanke des Dunkeltastungssignals BLANK das Signal WRENFIFO2 erzeugt.

Wie es bereits erwähnt wurde, findet keine Zwischenspeicherung statt, weswegen die beiden FIFO-Speichervorrichtungen 18a und 18b mit der halben Taktfrequenz, welche in der Frequenzeinstellvorrichtung 34 erzeugt wird, ausgelesen werden, wodurch die nun auf die beiden Monitoren verteilten Pixel in ihre DAWs 12a, 12b gelangen. Alternativ kann auch eine kleine Anzahl von Taktperioden vorhanden sein, bis die Lesedaten gültig sind.

Nachfolgend sei ein Beispiel betrachtet, bei dem eine Zeile aus acht Pixeln besteht, von denen vier Pixel zu dem Monitor 10a und die anderen vier Pixel zu dem Monitor 10b zur Anzeige geschickt werden sollen. Wie es aus den letzten beiden Zeilen von Fig. 3 ersichtlich ist, findet das Auslesen derart statt, daß gleichzeitig zum Auslesen des ersten Pixels einer Zeile aus der ersten FIFO-Speichervorrichtung 18a das letzte Pixel der vorherigen Zeile aus der zweiten FIFO-Speichervorrichtung 18b ausgelesen werden kann. Beim Auslesen des zweiten Pixels einer Zeile aus der ersten FIFO-Speichervorrichtung 18a wird der andere Monitor 10b dunkelgetastet, während beim Auslesen des dritten Pixels einer Zeile aus der ersten FIFO-Speichervorrichtung 18a das fünfte Pixel der gleichen Zeile aus der FIFO-Speichervorrichtung 18b ausgelesen wird. Das Auslesen des vierten Pixels einer Zeile aus der ersten FIFO-Speichervorrichtung 18a findet gleichzeitig mit dem Auslesen des sechsten Pixels der Zeile des eingangsseitigen Pixeldatenstroms 20 aus der zweiten FIFO-Speichervorrichtung 18b statt. Während des Auslesens des siebten Pixels der Zeile aus der zweiten FIFO-Speichervorrichtung 18b wird kein Pixel aus der ersten FIFO-Speichervorrichtung 18a ausgelesen, um den einen Monitor 10a dunkelzutasten. Die Dunkeltastung des einen Monitors 10a wird durch das Horizontalsynchronisationssignal HSYNC und durch das Dunkeltastungssignal BLANK gesteuert, während die Dunkeltastung des anderen Monitors 10b durch das verzögerte Horizontalsynchronisationssignal DELAYED HSYNC sowie durch das verzögerte Dunkeltastungssignal DELAYED BLANK gesteuert wird. Die beiden verzögerten Signale sind jeweils um die Hälfte 52 der aktiven Anzeigezeit 42 bezüglich ihrer unverzögerten Signale verzögert.

Aus dem obigen Beispiel einer Zeile mit acht Pixeln ist es offensichtlich, wie das Auslesen bei Zeilen mit mehr als acht Pixeln abläuft. Es sei jedoch angemerkt, daß bei einem bevorzugten Ausführungsbeispiel der vorliegenden Erfindung der FIFO 18b erst ausgelesen wird, wenn eine Hälfte einer anzuzeigenden Zeile in den FIFO 18a eingespeichert worden ist.

Durch Vorsehen von FIFO-Speichervorrichtungen, die tiefer als vier Pixel sind, ist es prinzipiell möglich, den zeitlichen Versatz zwischen dem Auslesen der beiden FIFO-Speichervorrichtungen 18a und 18b beliebig einzustellen, wobei die dargestellte Situation jedoch die wirtschaftlich günstigste darstellt, da das Pixel 5 einer Zeile des eingangsseitigen Pixeldatenstroms 20 erst parallel zu dem Pixel 3 derselben Zeile ausgelesen werden kann, da es, wie es aus dem Zeitablaufdiagramm von Fig. 3 ersichtlich ist, vorher nicht verfügbar ist.

## Patentansprüche

1. Verfahren zum Ansteuern von zwei Monitoren (10a, 10b) aufgrund eines eingangsseitigen Pixeldatenstroms (20), in dem Pixel für eine Zeile seriell angeordnet sind, bei dem ein Teil (48) einer jeden Zeile des eingangsseitigen Pixeldatenstroms (20) auf einem Monitor (10a) und ein anderer Teil (50) der Zeile auf einem anderen Monitor (10b) angezeigt werden, mit folgenden Schritten:
Einspeichern des einen Teils (48) der Zeile des eingangsseitigen Pixeldatenstroms ohne vorherige Zwischenspeicherung in eine FIFO-Speichervorrichtung (18a);
im Anschluß an das Einspeichern des ersten Teils (48) Einspeichern des anderen-Teils (50) der Zeile des eingangsseitigen Pixeldatenstroms (20) ohne vorherige Zwischenspeicherung in eine andere FIFO-Speichervorrichtung (18b);
Auslesen der einen FIFO-Speichervorrichtung (18a) mit der Pixelfrequenz (CLK/2), mit der der eine Monitor (10a) betrieben wird; und
Auslesen der anderen FIFO-Speichervorrichtung (18b) mit der Pixelfrequenz (CLK/2), mit der der andere Monitor (10b) betrieben wird.

2. Verfahren gemäß Anspruch 1, mit folgendem weiteren Schritt:
Erzeugen von zeitlichen Steuersignalen (CLK, HSYNC, BLANK) für die Ansteuerung der Monitore (10a, 10b) aufgrund von zeitlichen Steuersignalen des eingangsseitigen Pixeldatenstroms (20).

3. Verfahren gemäß Anspruch 1, mit folgendem weiteren Schritt:
Verzögern von zeitlichen Steuersignalen (HSYNC, BLANK) des eingangsseitigen Pixeldatenstroms (20), wodurch der andere Monitor (10b) zeitlich verzögert und synchron zu dem einen Monitor (10a) angesteuert wird.

4. Verfahren gemäß Anspruch 1,
bei dem der eine Teil (48) einer jeden Zeile des eingangsseitigen Pixeldatenstroms (20) und der andere Teil (50) einer jeden Zeile des eingangsseitigen Pixeldatenstroms (20) gleich groß sind und zusammen die Länge einer Zeile des eingangsseitigen Pixeldatenstroms (20) ergeben.

5. Verfahren gemäß Anspruch 4, das ferner folgende Schritte aufweist:
Einstellen eines Zählerreferenzwertes (COUNT REF) auf eine Anzahl der Pixel des einen Teils (48) einer jeden Zeile des eingangsseitigen Pixeldatenstroms; und
Zählen der Pixel einer jeden Zeile des eingangsseitigen Pixeldatenstroms (20) durch Zählen von Impulsen eines Takts (CLK), mit dem der eingangsseitige Pixeldatenstrom (20) in die eine und in die andere FIFO-Speichervorrichtung eingespeichert wird.

6. Verfahren gemäß Anspruch 5, mit folgenden weiteren Schritten:
Freigeben des Einspeicherns des einen Teils (48) der Zeile des eingangsseitigen Pixeldatenstroms (20) in die eine FIFO-Speichervorrichtung (18a) und Sperren des Einspeicherns in die andere FIFO-Speichervorrichtung (18b) vor dem Erreichen des Zählerreferenzwertes (COUNT REF) und nach dem Auftreten eines Dunkeltastungssignals (BLANK); und
Freigeben des Einspeicherns des anderen Teils (50) der Zeile des eingangsseitigen Pixeldatenstroms (20) in die andere FIFO-Speichervorrichtung (18b) und Sperren des Einspeicherns in die eine FIFO-Speichervorrichtung (18a) nach dem Erreichen des Zählerreferenzwertes (COUNT REF) und nach dem Auftreten des Dunkeltastungssignals (BLANK).

7. Verfahren gemäß Anspruch 6, mit folgenden weiteren Schritten:
Einstellen der Pixelfrequenz (CLK/2) des einen und des anderen Monitors (10a, 10b) auf die Hälfte der Taktfrequenz (CLK);
Halbieren der Frequenz des Taktsignals (CLK);
Auslesen der einen FIFO-Speichervorrichtung (18a) mit der halbierten Taktfrequenz beim Auftreten des Dunkeltastungssignals (BLANK);
Verzögern des Dunkeltastungssignals (BLANK) um eine Dauer (52), die gleich der Anzahl der Pixel des einen Teils (48) der Zeile des eingangsseitigen Pixeldatenstroms (20) multipliziert mit der Periodendauer des Taktsignals (CLK) ist; und
Auslesen der anderen FIFO-Speichervorrichtung (18b) beim Auftreten des verzögerten Dunkeltastungssignals (DELAYED BLANK), derart, daß das Auslesen der einen und der anderen FIFO-Speichervorrichtung (18a, 18b) synchron und zeitlich versetzt stattfindet.

8. Verfahren gemäß Anspruch 4, mit folgenden weiteren Schritten:
Erfassen eines Horizontalsynchronisationssignals (HSYNC) aus dem eingangsseitigen Pixeldatenstrom (20);
Verzögern des Horizontalsynchronisationssignals (HSYNC) um eine Dauer (52), die gleich der Anzahl der Pixel des einen Teils (48) der Zeile des eingangsseitigen Pixeldatenstroms (20) multipliziert mit der Periodendauer des Taktsignals (CLK) ist; und
Auslesen der anderen FIFO-Speichervorrichtung (18b) nach dem Auftreten des verzögerten Horizontalsynchronisationssignals (DELAYED HSYNC), derart, daß das Auslesen der einen und der anderen FIFO-Speichervorrichtung (18a, 18b) synchron und zeitlich versetzt stattfindet.

9. Verfahren gemäß Anspruch 1,
bei dem die Pixelfrequenz, mit der der eine Monitor (10a) betrieben wird, und die Pixelfrequenz, mit der der andere Monitor (10b) betrieben wird, zusammen die Taktfrequenz (CLK) ergeben, mit der das Einspeichern des einen Teils (48) der Zeile des eingangsseitigen Pixeldatenstroms in die eine FIFO-Speichervorrichtung (18a) und das Einspeichern des anderen Teils (50) der Zeile des eingangsseitigen Pixeldatenstroms (20) in die zweite FIFO-Speichervorrichtung (18b) stattfinden.

10. Monitorsteuerschaltung zum Ansteuern von zwei Monitoren (10a, 10b) aufgrund eines eingangsseitigen Pixeldatenstroms (20), in dem Pixel für eine Zeile seriell angeordnet sind, bei der ein Teil (48) einer jeden Zeile des eingangsseitigen Pixeldatenstroms (20) auf einem Monitor (10a) und ein anderer Teil (50) der Zeile des eingangsseitigen Pixeldatenstroms auf einem anderen Monitor (10b) angezeigt werden, mit folgenden Merkmalen: einer einen und einer anderen FIFO-Speichervorrichtung (18a, 18b); und einer Steuerung zum Steuern des Einspeicherns des einen Teils (48) der Zeile des eingangsseitigen Pixeldatenstroms (20) ohne vorherige Zwischenspeicherung in die eine FIFO-Speichervorrichtung (18a), zum Steuern des Einspeicherns des anderen Teils (50) der Zeile des eingangsseitigen Pixeldatensstroms ohne vorherige Zwischenspeicherung in die andere FIFO-Speichervorrichtung (18b) im Anschluß an das Einspeichern des ersten Teils (48), zum Steuern des Auslesens der einen FIFO-Speichervorrichtung (18a) mit der Pixelfrequenz (CLK/2), mit der der eine Monitor (10a) betrieben wird, und zum Steuern des Auslesens der anderen FIFO-Speichervorrichtung (18b) mit der Pixelfrequenz (CLK/2), mit der der andere Monitor (10b) betrieben wird.

11. Monitorsteuerschaltung gemäß Anspruch 10,
bei der die Steuerung (30) einen Zeitgenerator (32) aufweist, der aufgrund von zeitlichen Steuersignalen (VSYNC, HSYNC, BLANK) des eingangsseitigen Pixeldatenstroms (20) zeitliche Steuersignale für die Ansteuerung der Monitore (10a, 10b) erzeugt, und der ferner mit einer Frequenzeinstellungsvorrichtung (34) verbunden ist, um die Pixelfrequenzen (CLK/2) mit denen die Monitore (10a, 10b) betrieben werden, in Abhängigkeit von der Pixelfrequenz des eingangsseitigen Pixeldatenstroms (20) einzustellen.

12. Monitorsteuerschaltung nach Anspruch 11,
bei der die Steuerung (30) ferner eine FIFO-Steuerlogik (28) aufweist, wobei die FIFO-Steuerlogik (28) folgende Merkmale aufweist:
ein Bildschirmauflösungsregister (36), das mit einem Hostbus (26) eines Computers verbindbar ist und Längenwerte des einen Teils (48) und des anderen Teils (50) der Zeile des eingangsseitigen Pixeldatenstroms als Reaktion auf Steuersignale (ADDRESS, DATA) von dem Computer ausgibt;
eine Pixelzählervorrichtung (38), die mit dem Zeitgenerator (32) verbindbar ist und aufgrund der zeitlichen Steuersignale (VSYNC, HSYNC, BLANK) des eingangsseitigen Pixeldatenstroms (20) FIFO-Steuersignale (WRENFIFO1, WRENFIFO2) zum Steuern der einen und der anderen FIFO-Speichervorrichtung (18a, 18b) erzeugt; und
eine programmierbare Verzögerungseinrichtung (40), die aufgrund der zeitlichen Steuersignale (HSYNC, BLANK, CLK) und aufgrund der Längen des einen und des anderen Teils (48, 50) der Zeile des eingangsseitigen Pixeldatenstroms (20) verzögerte Steuersignale (DELAYED SYNC, DELAYED BLANK) für die Ansteuerung des anderen Monitors (10b) erzeugt.

## Claims

1. A method for controlling two monitors (10a, 10b) on the basis of an input-side pixel data stream (20), wherein one part (48) of each line of the input-side pixel data stream (20) is displayed on one monitor (10a) and another part (50) of the line is displayed on another monitor (10b), comprising the following steps:
storing one part (48) of the line of the input-side pixel data stream (20) in one FIFO memory device (18a);
storing the other part (50) of the line of the input-side pixel data stream (20) in another FIFO memory device (18b);
reading out one FIFO memory device (18a) with the pixel frequency (CLK/2) with which one monitor (10a) is operated; and
reading out the other FIFO memory device (18b) with the pixel frequency (CLK/2) with which the other monitor (10b) is operated.

2. A method according to claim 1, with the following additional step:
creating timing control signals (CLK, HSYNC, BLANK) for controlling the monitors (10a, 10b) on the basis of timing control signals of the input-side pixel data stream (20).

3. A method according to claim 1, with the following additional step:
delaying timing control signals (HSYNC, BLANK) of the input-side pixel data stream (20), whereby one of the monitors (10b) is controlled with a time delay and in synchronism with the other monitor (10a).

4. A method according to claim 1,
wherein one part (48) of each line of the input-side pixel data stream (20) and the other part (50) of each line of the input-side pixel data stream (20) are of the same size and together have the length of a line of the input-side pixel data stream (20).

5. A method according to claim 4, having the following additional steps:
setting a counter reference value (COUNT REF) to the number of pixels of one part (48) of each line of the input-side pixel data stream; and
counting the pixels of each line of the input-side pixel data stream (20) by counting the pulses of a clock (CLK) with which the input-side pixel data stream (20) is stored in each of the FIFO memory devices.

6. A method according to claim 5, with the following additional steps:
enabling the storage of one part (48) of the line of the input-side pixel data stream (20) in one FIFO memory device (18a) and blocking storage in the other FIFO memory device (18b) before reaching the counter reference value (COUNT REF) and after the appearance of a blanking signal (BLANK); and
enabling the storage of the other part (50) of the line of the input-side pixel data stream (20) in one FIFO memory device (18b) and blocking storage in the other FIFO memory device (18a) after reaching the counter reference value (COUNT REF) and after the appearance of the blanking signal (BLANK)

7. A method according to claim 6, with the following additional steps:
setting the pixel frequency (CLK/2) of each monitor (10a, 10b) to half the clock frequency (CLK);
halving the frequency of the clock signal (CLK);
reading out one FIFO memory device (18a) with the halved clock frequency on appearance of the blanking signal (BLANK);
delaying the blanking signal (BLANK) by a time (52) which is equal to the number of pixels of one part (48) of the line of the input-side pixel data stream (20) multiplied by the period duration of the clock signal (CLK); and
reading out the other FIFO memory device (18b) on appearance of the delayed blanking signal (DELAYED BLANK) in such a way that both FIFO memory devices (18a, 18b) are read out in synchronism and with a time shift.

8. A method according to claim 4, with the following additional steps:
detecting a horizontal synchronization signal (HSYNC) in the input-side pixel data stream (20);
delaying the horizontal synchronization signal (HSYNC) by a time (52) which is equal to the number of pixels of one part (48) of the line of the input-side pixel data stream (20) multiplied by the period duration of the clock signal (CLK); and
reading out the other FIFO memory device (18b) after the appearance of the delayed horizontal synchronization signal (DELAYED HSYNC) in such a way that both FIFO memory devices (18a, 18b) are read out in synchronism and with a time shift.

9. A method according to claim 1,
wherein the pixel frequency with which one monitor (10a) is operated and the pixel frequency with which the other monitor (10b) is operated together amount to the clock frequency (CLK) with which one part (48) of the line of the input-side pixel data stream (20) is stored in one FIFO memory device (18a) and the other part (50) of the line of the input-side pixel data stream (20) is stored in the second FIFO memory device (18b).

10. A monitor control circuit for controlling two monitors (10a, 10b) on the basis of an input-side pixel data stream (20), wherein one part (48) of each line of the input-side pixel data stream (20) is displayed on one monitor (10a) and another part (50) of the line of the input-side pixel data stream is displayed on another monitor (10b), comprising the following features:
two FIFO memory devices (18a, 18b); and
a control (30) for controlling the storage of one part (48) of the line of the input-side pixel data stream (20) in one FIFO memory device (18a), for controlling the storage of the other part (50) of the line of the input-side pixel data stream in the other FIFO memory device (18b), for controlling the readout of one FIFO memory device (18a) with the pixel frequency (CLK/2) with which one monitor (10a) is operated, and for controlling the readout of the other FIFO memory device (18b) with the pixel frequency (CLK/2) with which the other monitor (10b) is operated

11. A monitor control circuit according to claim 10,
wherein the control (30) includes a time generator (32) which creates timing control signals for controlling the monitors (10a, 10b) on the basis of timing control signals (VSYNC, HSYNC, BLANK) of the input-side pixel data stream (20) and which is also connected to a frequency setting device (34) for setting the pixel frequencies (CLK/2) with which the monitors (10a, 10b) are operated so as to take account of the pixel frequency of the input-side pixel data stream (20).

12. A monitor control circuit according to claim 11,
wherein the control (30) also includes a FIFO control logic (28), the FIFO control logic (28) comprising the following features:
a screen resolution register (36), which can be connected to a host bus (26) of a computer and which supplies length values of one part (48) and of the other part (50) of the line of the input-side pixel data stream in response to control signals (ADDRESS, DATA) from the computer;
a pixel counter (38), which can be connected to the time generator (32) and which creates FIFO control signals (WRENFIFO1, WRENFIF02) for controlling the two FIFO memory devices (18a, 18b) on the basis of the timing control signals (VSYNC, HSYNC, BLANK) of the input-side pixel data stream (20); and
a programmable delay unit (40), which creates delayed control signals (DELAYED SYNC, DELAYED BLANK) for controlling one of the monitors (10b) on the basis of timing control signals (HSYNC, BLANK, CLK) and on the basis of the lengths of the two parts (48, 50) of the line of the input-side pixel data stream (20).

## Revendications

1. Procédé pour la commande de deux moniteurs (10a, 10b) sur base d'un courant de données de pixels (20) du côté de l'entrée, dans lequel les pixels d'une ligne sont disposés en série, dans lequel une partie (48) de chacune des lignes du courant de données de pixels (20) du côté de l'entrée est affichée à un moniteur (10a) et une autre partie (50) de la ligne est affichée à un autre moniteur (10b), aux étapes suivantes consistant à :
mémorisation de l'une partie (48) de la ligne du courant de données de pixels du côté de l'entrée sans mémorisation intermédiaire préalable dans un dispositif de mémoire FIFO (18a);
à la suite de la mémorisation de la première partie (48), mémoriser l'autre partie (50) de la ligne du courant de données de pixels (20) du côté de l'entrée sans mémorisation intermédiaire préalable dans un autre dispositif de mémoire FIFO (18b);
lire de l'un dispositif de mémoire FIFO (18a) à la fréquence de pixels (CLK/2) à laquelle fonctionne l'un moniteur (10a); et
lire de l'autre dispositif de mémoire FIFO (18b) à la fréquence de pixels (CLK/2) à laquelle fonctionne l'autre moniteur (10b).

2. Procédé suivant la revendication 1, à l'étape supplémentaire suivante consistant à :
générer un signal de commande dans le temps (CLK, HSYNC, BLANK) pour l'activation des moniteurs (10a, 10b) sur base de signaux de commande dans le temps du courant de données de pixels (20) du côté de l'entrée.

3. Procédé suivant la revendication 1, à l'étape supplémentaire suivante consistant à :
retarder les signaux de commande dans le temps (HSYNC, BLANK) du courant de données de pixels (20) du côté de l'entrée, d'où l'autre moniteur (10b) est activé de manière retardée dans le temps et synchrone avec l'un moniteur (10a).

4. Procédé suivant la revendication 1, dans lequel l'une partie (48) de chacune des lignes du courant de données de pixels (20) du côté de l'entrée et l'autre partie (50) de chacune des lignes du courant de données de pixels (20) du côté de l'entrée sont de même grandeur et constituent, ensemble, la longueur d'une ligne du courant de données de pixels (20) du côté de l'entrée.

5. Procédé suivant la revendication 4, présentant, par ailleurs, les étapes suivantes consistant à :
régler une valeur de référence de compteur (COUNT REF) à un nombre de pixels de l'une partie (48) de chacune des lignes du courant de données de pixels du côté de l'entrée ; et
compter les pixels de chacune des lignes du courant de données de pixels (20) du côté de l'entrée en comptant les impulsions d'un cycle d'horloge (CLK) selon lequel le courant de données de pixels (20) du côté de l'entrée est mémorisé dans l'un et dans l'autre dispositif de mémoire FIFO.

6. Procédé suivant la revendication 5, aux étapes supplémentaires suivantes consistant à :
libérer la mémorisation de l'une partie (48) de la ligne du courant de données de pixels (20) du côté de l'entrée dans l'un dispositif de mémoire FIFO (18a) et bloquer la mémorisation dans l'autre dispositif de mémoire FIFO (18b) avant d'atteindre la valeur de référence de compteur (COUNT REF) et après que se produise un signal de balayage obscur (BLANK) ; et
libérer la mémorisation de l'autre partie (50) de la ligne du courant de données de pixels (20) du côté de l'entrée dans l'autre dispositif de mémoire FIFO (18b) et bloquer la mémorisation dans l'un dispositif de mémoire FIFO (18a) après que soit atteinte la valeur de référence de compteur (COUNT REF) et après que se produise un signal de balayage obscur (BLANK).

7. Procédé suivant la revendication 6, aux étapes supplémentaires suivantes consistant à :
régler la fréquence de pixels (CLK/2) de l'un et de l'autre moniteur (10a, 10b) à la moitié de la fréquence de cycle d'horloge (CLK) ;
diviser par deux la fréquence du signal de cycle d'horloge (CLK) ;
lire de l'un dispositif de mémoire FIFO (18a) à la fréquence de cycle d'horloge divisée par deux lorsque se produit le signal de balayage obscur (BLANK) ;
retarder le signal de balayage obscur (BLANK) d'une durée égale au nombre de pixels de l'une partie (48) de la ligne du courant de données de pixels (20) du côté de l'entrée multiplié par la durée de période du signal de cycle d'horloge (CLK) ; et
lire de l'autre dispositif de mémoire FIFO (18b) lorsque se produit le signal de balayage obscur retardé (DELAYED BLANK), de sorte que la lecture de l'un et de l'autre dispositif de mémoire FIFO (18a, 18b) ait lieu de manière synchrone et décalée dans le temps.

8. Procédé suivant la revendication 4, aux étapes supplémentaires suivantes consistant à :
détecter un signal de synchronisation horizontale (HSYNC) du courant de données de pixels (20) du côté de l'entrée ;
retarder le signal de synchronisation horizontale (HSYNC) d'une durée (52) égale au nombre de pixels de l'une partie (48) de la ligne du courant de données de pixels (20) du côté de l'entrée multiplié par la durée de période du signal de cycle d'horloge (CLK) ; et
lire de l'autre dispositif de mémoire FIFO (18b) après que se produise le signal de synchronisation horizontale retardé (DELAYED HSYNC), de sorte que la lecture de l'un et de l'autre dispositif de mémoire FIFO (18a, 18b) ait lieu de manière synchrone et décalée dans le temps.

9. Procédé suivant la revendication 1, dans lequel la fréquence de pixels à laquelle fonctionne l'un moniteur (10a) et la fréquence de pixels à laquelle fonctionne l'autre moniteur (10b) donnent, ensemble, la fréquence de cycle d'horloge (CLK) à laquelle ont lieu la mémorisation de l'une partie (48) de la ligne du courant de données de pixels du côté de l'entrée dans l'un dispositif de mémoire FIFO (18a) et la mémorisation de l'autre partie (50) de la ligne du courant de données de pixels (20) du côté de l'entrée dans le second dispositif de mémoire FIFO (18b).

10. Circuit de commande de moniteur destiné à la commande de deux moniteurs (10a, 10b) sur base d'un courant de données de pixels (20) du côté de l'entrée, dans lequel les pixels d'une ligne sont disposés en série, dans lequel une partie (48) de chacune des lignes du courant de données de pixels (20) du côté de l'entrée est affichée à un moniteur (10a) et une autre partie (50) de la ligne du courant de données de pixels du côté de l'entrée est affichée à un autre moniteur (10b), aux caractéristiques suivantes:
un dispositif de mémoire FIFO et un autre dispositif de mémoire FIFO (18a, 18b) ; et une commande destinée à commander la mémorisation de l'une partie (48) de la ligne du courant de données de pixels (20) du côté de l'entrée sans mémorisation intermédiaire préalable dans l'un dispositif de mémoire FIFO (18a), à commander la mémorisation de l'autre partie (50) de la ligne du courant de données de pixels du côté de l'entrée sans mémorisation intermédiaire préalable dans l'autre dispositif de mémoire FIFO (18b) à la suite de la mémorisation de la première partie (48), à commander la lecture de l'un dispositif de mémoire FIFO (18a) à la fréquence de pixels (CLK/2) à laquelle fonctionne l'un moniteur (10a), et à commander la lecture de l'autre dispositif de mémoire FIFO (18b) à la fréquence de pixels (CLK/2) à laquelle fonctionne l'autre moniteur (10b).

11. Circuit de commande de moniteur suivant la revendication 10, dans lequel la commande (30) présente un générateur de temps (32) qui, sur base de signaux de commande dans le temps (VSYNC, HSYNC, BLANK) du courant de données de pixels (20) du côté de l'entrée, génère des signaux de commande dans le temps pour l'activation des moniteurs (10a, 10b) et qui, par ailleurs, est relié à un dispositif de réglage de fréquence (34), pour régler les fréquences de pixels (CLK/2) auxquelles fonctionnent les moniteurs (10a, 10b) en fonction de la fréquence de pixels du courant de données de pixels (20) du côté de l'entrée.

12. Circuit de commande de moniteur suivant la revendication 11, dans lequel la commande (30) présente, par ailleurs, une logique de commande FIFO (28), la logique de commande FIFO (28) présentant les caractéristiques suivantes :
un registre de résolution d'écran (36) pouvant être relié à un collecteur hôte (26) d'un ordinateur et sortant des valeurs de longueur de l'une partie (48) et de l'autre partie (50) de la ligne du courant de données de pixels du côté de l'entrée en réaction aux signaux de commande (ADDRESS, DATA) de l'ordinateur ;
un dispositif compteur de pixels (38) pouvant être relié au générateur de temps (32) et générant, sur base des signaux de commande dans le temps (VSYNC, HSYNC, BLANK) du courant de données de pixels (20) du côté de l'entrée, des signaux de commande FIFO (WRENFIFO1, WRENFIFO2) destinés à commander l'un et l'autre dispositif de mémoire FIFO (18a, 18b) ; et
un dispositif de temporisation programmable (40) générant, sur base des signaux de commande dans le temps (HSYNC, BLANK, CLK) et sur base des longueurs de l'une et de l'autre partie (48, 50) de la ligne du courant de données de pixels (20) du côté de l'entrée, des signaux de commande retardés (DELAYED SYNC, DELAYED BLANK) pour l'activation de l'autre moniteur (10b).
